# EUROPÄISCHE PATENTSCHRIFT

(11) **EP 2 671 055 B1**
(45) Veröffentlichungstag und Bekanntmachung des Hinweises auf die Patenterteilung: **21.02.2018**
(21) Anmeldenummer: 11788778.6
(22) Anmeldetag: 26.11.2011
(51) Int. Cl.: G01G 13/02, B65B 37/04, G01N 35/10

(54) **VORRICHTUNG ZUM MANUELLEN FEINDOSIEREN SOWIE WAAGE**
DEVICE FOR MANUAL FINE METERING, AND SCALE
DISPOSITIF POUR UN DOSAGE MANUEL DE PRÉCISION ET BALANCE

(30) Priorität: 01.02.2011 DE 102011000433
(43) Veröffentlichungstag der Anmeldung: 11.12.2013
(73) Patentinhaber: Sartorius Lab Instruments GmbH & Co. KG, 37079 Göttingen (DE)
(72) Erfinder: LAUBSTEIN, Michael, 37077 Göttingen (DE)
(74) Vertreter: Prinz & Partner mbB
(86) Internationale Anmeldenummer: PCT/EP2011/005955
(87) Internationale Veröffentlichungsnummer: WO 2012/103907

(56) Entgegenhaltungen:
- CH-A5- 681 148
- GB-A- 2 440 443
- KR-B1- 100 857 308
- US-A- 5 870 961

## Beschreibung

Die Erfindung betrifft eine Vorrichtung zum manuellen Feindosieren einer insbesondere pulverförmigen Substanz von einem manuellenTransportwerkzeug. Ferner betrifft die Erfindung eine Waage mit einer entsprechenden Vorrichtung.

In Laboratorien der chemischen und pharmazeutischen Industrie und Forschung werden für die Analyse von Substanzen kleinste Probenmengen benötigt. Einen Schwerpunkt bilden Probenmengen im Bereich von 1 bis 50 mg. Die Proben werden oftmals nur einmalig hergestellt, sodass automatische Dosierköpfe ungeeignet sind. Für die manuelle Feindosierung wird eine hochauflösende Waage verwendet, auf deren Aufnahmebehälter (zum Beispiel Waagschale) mittels eines Transportwerkzeugs die Substanz geschüttet wird, bis die gewünschte Masse auf der Aufnahme liegt. Das Transportwerkzeug ist üblicherweise ein Spatel, der über der Aufnahme an der Waage leicht gekippt, geklopft oder geschüttelt wird, sodass kleine Mengen der Substanz von ihm herabfallen. Mittels dieser in Laboratorien üblichen Dosierverfahren sind Dosiergenauigkeiten von oftmals nur 10 % erreichbar.

Eine Vorrichtung zum automatischen, also nicht zum manuellen Dosieren ist aus der EP 2 072 974 A1 bekannt. Hier wird aus einem Behälter automatisch Pulver in einen vibrierenden Trichter geschüttet, von wo aus es in einen Behälter gelangt, der eine kleine Befüllöffnung besitzt.

Bekannt sind des Weiteren sogenannte Vibrationsspatel. Im Griffstück des Spatels ist ein vibrierendes Element untergebracht, das die Spatelspitze zum Vibrieren bringt und somit die Dosierung unterstützt. Das entsprechend große Griffstück erweist sich dabei beim Handling von Proben im mg-Bereich als unhandlich.

Weitere Vorrichtungen zum automatischen Dosieren, die einen Vibrationsspatel aufweisen, sind aus der US 5,870,961 A, der KR 100 857 308 B1 und der CH 681 148 A5 bekannt.

Aus der GB 2 440 443 A ist zudem eine Vorrichtung zum automatischen Dosieren bekannt, die einen Aufnahmebehälter für ein zu dosierendes Substrat umfasst, das mit einem Schwingungsanreger gekoppelt ist, um Verstopfungen zu lösen.

Aufgabe der Erfindung ist es, eine Vorrichtung zum manuellen Feindosieren zu schaffen, die eine schnellere, vor allem aber wesentlich genauere Dosierung von Substanzen, insbesondere pulverförmigen Substanzen, aus dem manuellen Transportwerkzeug erlaubt.

Dies wird bei einer Vorrichtung zum manuellen Feindosieren einer insbesondere pulverförmigen Substanz aus einem manuellen Transportwerkzeug durch ein mit einem Schwingungserzeuger gekoppeltes, durch den Schwingungserzeuger in Vibrationen versetzbares bewegliches Teil, das in dem vom Transportwerkzeug kontaktierbaren Abschnitt der Vorrichtung ein nach außen hin geschlossener Körper ist, gelöst, gegen das das Transportwerkzeug beweglich ist, wobei das Transportwerkzeug bei Kontakt mit dem Schwingungserzeuger vibriert, und wobei ein Sensor vorgesehen ist, der die Anwesenheit des Transportwerkzeugs in der Nähe des beweglichen Teils oder ein Berühren oder Auslenken des beweglichen Teils durch das Transportwerkzeug detektiert und ein Einschalten des Schwingungserzeugers initiiert. Mittels der erfindungsgemäßen Vorrichtung kann das Transportwerkzeug gegen das bewegliche Teil gedrückt werden, wobei es durch das vibrierende Teil selbst in Schwingungen versetzt wird. Diese geringen Vibrationen sind genau vorbestimmbar, sodass kein Kippen oder Klopfen des Transportwerkzeugs mehr nötig ist, um die Substanz vom Werkzeug herabfallen zu lassen. Auch die Geschwindigkeit der Dosierung ist wesentlich höher als dies rein manuell möglich wäre. Das vibrierende Teil ist in dem von außen zugänglichen Abschnitt, d.h. in dem vom Transportwerkzeug kontaktierbaren Abschnitt der Vorrichtung, nach außen hin ein geschlossener Körper. Das bedeutet, das vibrierende Teil selbst dosiert nicht, weil die zu dosierende Substanz nicht wie bei einem Trichter, einem Behälter oder dergleichen durch es hindurch fällt. Ferner bleibt durch die außenseitig geschlossene Oberfläche keine Substanz an dem beweglichen Teil haften.

Der Schwingungserzeuger ist also nicht permanent aktiv geschaltet, sondern nur dann, wenn das Transportwerkzeug in seiner Nähe ist. Dies ist auch deshalb vorteilhaft, weil sich dadurch der Bediener ganz auf die Dosierung konzentrieren kann und nicht zusätzlich Schalter zum Ein- und Ausschalten des Schwingungserzeugers betätigen muss. Darüber hinaus kann bei hochauflösenden Waagen eine permanente Vibration das Messergebnis verfälschen.

Ein solcher Sensor, der die Näherung detektiert, kann beispielsweise ein optischer Sensor sein.

Die Ausführungsform als Berührungssensor ist vor allem auch sehr einfach technisch realisierbar. Der Bediener drückt ganz einfach seitlich gegen das bewegliche Teil, wodurch ein Kontakt geschlossen wird, und der Schwingungserzeuger wird angeschaltet.

Der Schwingungserzeuger ist elektrisch betrieben und z.B. ein Piezoantrieb oder ein Elektromotor.

Die Vorrichtung ist insbesondere eine in sich geschlossene, mobile Einheit, die einfach auf eine Lagerung (insbesondere einen Windschutz eines Wägeraums) gestellt und von ihm wieder abgenommen werden kann, ohne dass dafür Werkzeuge oder Befestigungsmittel nötig wären.

Der Schwingungserzeuger ist mit einem Schalter zum Ein- und Ausschalten gekoppelt, wobei bei der einfachsten Ausführungsform der Schwingungserzeuger durch einen Schalter ein- und ausgeschaltet werden kann, wobei auch ein Standby-Betrieb möglich ist.

Eine Schaltung als Teil der Vorrichtung kann so ausgebildet sein, dass der Schwingungserzeuger so lange bewegt wird, solange sich das Transportwerkzeug in der Nähe des beweglichen Teils befindet bzw. es berührt oder auslenkt.

Darüber hinaus kann eine Zeitschaltung vorgesehen sein, die den Schwingungserzeuger nach Anlaufen für eine feste Zeitdauer laufen lässt.

Es ist von Vorteil, wenn die Frequenz und/oder die Amplitude der Vibrationen verstellbar sind, um diese beispielsweise auch an die Art der Substanz optimal anpassen zu können.

Die Vorrichtung sollte ein Gehäuse aufweisen, das insbesondere in sich geschlossen ist, um eine Kontamination des Gehäuseinneren durch die Substanzen zu verhindern. Das bewegliche Teil ragt aus dem Gehäuse heraus.

Gerade im Hinblick auf die zu vermeidende Kontamination ist es von Vorteil, wenn das Teil auswechselbar vom Rest der Vorrichtung gelagert ist, insbesondere einfach durch Herausziehen ohne Verwendung eines Werkzeugs von der Vorrichtung gelöst und durch Einstecken wieder an sie angekoppelt werden kann.

Das bewegliche Teil ist gemäß der bevorzugten Ausführungsform langgestreckt, z.B. ein Stab, insbesondere ein möglichst glatter, zylindrischer Metallstab.

Die Lagerung des beweglichen Teils ist elastisch.

Vorzugsweise bildet die elastische Lagerung zudem eine Dichtung des Gehäuses um das bewegliche Teil herum, sodass die elastische Lagerung eine Doppelfunktion hat. In der einfachsten Ausführungsform ist das bewegliche Teil lediglich in eine Art Gummiring gesteckt, der das bewegliche Teil gegen Herausfallen sichert, aber auch seitlich lagert.

Die Vorrichtung kann auch sehr einfach von einem Arbeitsplatz zum anderen gewechselt oder installiert werden, wenn sie batteriebetrieben ist.

Die übliche Nutzung der erfindungsgemäßen Vorrichtung wird darin bestehen, dass sie auf einen Behälter oder auf eine Öffnung eines Raumes aufsetzbar ist. Das bewegliche Teil ragt damit in den Raum hinein, der Rest der Vorrichtung bleibt außerhalb desselben. Der Raum ist insbesondere ein Wägeraum, der durch einen Windschutz abgeschlossen ist. Die Vorrichtung bildet so einen Teil des Deckels oder den gesamten Deckel des Windschutzes.

Der Boden des Gehäuses hat insbesondere eine Schwingungsisolierung, zum Beispiel eine elastische Schicht, die einerseits für die Schwingungsentkoppelung sorgt und andererseits für eine Abdichtung.

Die Erfindung betrifft darüber hinaus auch eine elektronische Waage, mit einer erfindungsgemäßen Vorrichtung, die oberhalb einer Waagschale positioniert ist. Die Vorrichtung ist im Betrieb vorzugsweise lösbar oder abnehmbar mit der Waage gekoppelt, sodass die Vorrichtung raumfest positioniert ist.

Die Vorrichtung kann mit der Waage so gekoppelt sein, dass bei Erreichen einer vorbestimmten, zu dosierenden Masse der Substanz der Motor ausgeschaltet wird. Dies sorgt für eine hochgenaue Dosierung.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht einer erfindungsgemäßen Waage mit erfindungsgemäßer Dosiervorrichtung, und
- Figur 2 eine schematische Schnittansicht durch eine erfindungsgemäße Dosiervorrichtung.

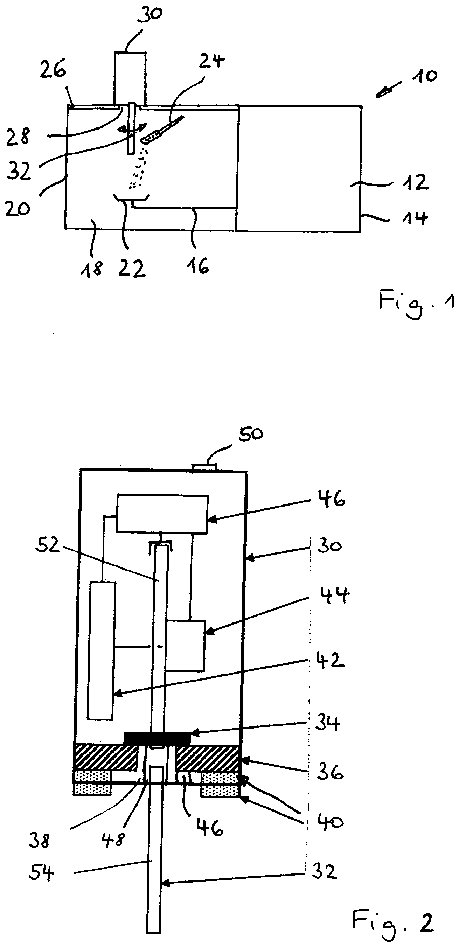

In Figur 1 ist eine elektronische Waage 10 dargestellt, welche ein Wägesystem 12 aufweist, das durch ein Gehäuse 14 umschlossen und an dem ein Lastkragarm 16 gelagert ist. Dieser Lastkragarm 16 ragt aus dem Gehäuse 14 in einen Wägeraum 18 hinein, der durch einen Windschutz 20 abgegrenzt ist. Der Windschutz 20 kann seitlich geöffnet werden, um das zu wiegende Gut in den Wägeraum 18 einzubringen und auf eine Wägeschale 22 am Kragarm 16 zu dosieren. Natürlich kann auf der Wägeschale 22 auch ein Behälter gestellt sein, in den die zu dosierende Substanz gefüllt wird.

Derartige hochauflösende Waagen werden, wie eingangs bereits erläutert, insbesondere in Laboratorien der chemischen und pharmazeutischen Industrie und Forschungsabteilungen verwendet. Die Dosierung von Substanzen muss dabei sehr genau erfolgen, insbesondere da Probenmengen von teilweise nur 1 mg abgewogen werden müssen.

Die Substanzen werden mit einem Transportwerkzeug 24 manuell in den Wägeraum 18 eingebracht und dosiert. Üblicherweise ist das Transportwerkzeug 24 ein Spatel, der ein rinnenförmiges Ende besitzt, auf dem eine Kleinstmenge einer pulverförmigen Substanz transportiert wird.

Die obere Wand 26 des Windschutzes 20 besitzt eine Öffnung 28, in die eine Vorrichtung zum manuellen Feindosieren hineinragt. Diese Vorrichtung hat ein außerhalb des Wägeraums befindliches Gehäuse 30 sowie ein aus dem Gehäuse 30 herausragendes und von oben vertikal in den Wägeraum 18 hineinragendes bewegliches Teil 32. Das bewegliche Teil 32 ist in dem Bereich, in dem es aus dem Gehäuse 30 herausragt, von außen geschlossen, d.h. es besitzt keine Hinterschneidung oder Öffnung.

Im dargestellten Ausführungsbeispiel ist das bewegliche Teil 32 ein zylindrischer, länglicher Stab, insbesondere aus Metall.

Das Gehäuse 30 schließt die Öffnung 28 vorzugsweise staubdicht ab.

Die Vorrichtung ist abnehmbar, das heißt, sie ist vorzugsweise nur auf die Wand 26 gestellt und kann ohne Demontage entfernt und an einer anderen Waage verwendet werden.

Gemäß der bevorzugten Ausführungsform ist die Vorrichtung energieautark nach außen hin. Die Vorrichtung ist batteriebetrieben, wie nachfolgend noch gezeigt wird. Dies erhöht die Einsetzbarkeit der Vorrichtung.

Das bewegliche Teil 32 kann, wie nachfolgend ebenfalls noch detaillierter beschrieben wird, in Vibrationen versetzt werden, sodass das Transportwerkzeug 24, wenn es seitlich gegen das vibrierende Teil 32 gedrückt wird, ebenfalls in Vibrationen versetzt wird. Dadurch fallen, sehr fein dosiert, kleine Mengen von Substanzen vom Transportwerkzeug 24 herab.

Wie in Figur 1 zu erkennen, ist das bewegliche Teil 32 oberhalb zur Wägeschale 22 ausgerichtet, vorzugsweise zentral zu dieser.

Der Aufbau der erfindungsgemäßen Vorrichtung ist in Figur 2 exakter dargestellt. Das stabförmige, bewegliche Teil 32 ragt in das Gehäuse 30 hinein und ist in axialer und radialer Richtung durch ein elastisches Lager 34, zum Beispiel in Form eines Elastomerringes gehalten. Vorzugsweise ist nur eine Lagerstelle vorhanden, die zwischen den Enden, im mittleren Abschnitt des Teils 32 liegt.

Das Lager 34, in dem das Teil 32 gehaltert ist, stellt zudem auch eine Dichtung des Gehäuses 30 nach unten hin dar.

Ein Träger 36 bildet sozusagen einen Sockel oder sogar den Boden des Gehäuses 30 und hat eine Öffnung 38, die groß genug ist, um eine seitliche Auslenkung des Teils 32 zu erlauben. Diese Öffnung 38 wird nach oben durch das Lager 34 geschlossen, welches an dem Träger 36 befestigt ist, beispielsweise durch Kleben.

Um eine Schwingungsentkoppelung der Vorrichtung gegenüber der Wand 26 zu erreichen, kann innerhalb oder außerhalb des Gehäuses 30 im Bereich von dessen Boden eine Schwingungsisolierung 40 vorgesehen sein, beispielsweise durch Elastomerscheiben. Die außerhalb des Gehäuses 30 sitzende Schwingungsisolierung 40, hier in Form von Ringen dargestellt, sitzt auf dem Rand der Wand 26 um die Öffnung 28 herum auf und wirkt ebenfalls als Dichtung.

Im Inneren des Gehäuses 30 ist eine Batterie 42 untergebracht, die auch aufladbar ausgeführt ist. Diese Batterie 42 ist mit einem Schwingungserzeuger 44 gekoppelt, der wiederum mit dem beweglichen Teil 32 gekoppelt ist.

Die bevorzugte Ausführungsform eines solchen Schwingungserzeuger 44 ist ein Motor mit einer Unwucht.

Ein im Gehäuse 30 vorgesehener Schaltkreis, der durch Verbindungsleitungen symbolisiert ist, weist darüber hinaus einen oder mehrere Sensoren 46 auf.

Der Sensor 46 ist im einfachsten Fall ein Schalter, der mit dem Teil 32 gekoppelt ist und der eine seitliche Auslenkung des Teils 32 detektiert. Ferner sind Berührungssensoren sinnvoll verwendbar.

Das Teil 32 besteht aus zwei Abschnitten, die zweckmäßigerweise an einer Koppelstelle 48 miteinander lösbar verbunden werden können, nämlich aus einem ständig mit dem Sensor 46 und dem Schwingungserzeuger 44 in Eingriff befindlichen oberen Teil 52 und einem auswechselbaren unteren Teil 54.

Darüber hinaus kann der Sensor 46 aber auch ein berührungsloser Sensor sein, beispielsweise ein Reed-Sensor, der ebenfalls eine seitliche Auslenkung des beweglichen Teils 32 erfasst. Auch optische Sensoren zur Lageerkennung sind natürlich möglich. Darüber hinaus könnte ein Sensor 46 auch an der unteren Stirnwand des Gehäuses 30 sitzen und das Vorhandensein des Transportwerkzeugs 24 detektieren.

Der Zweck des Sensors 46, unabhängig davon, wie er gestaltet ist, besteht darin, dass das Vorhandensein des Transportwerkzeugs 24 detektiert und der elektrische Schwingungserzeuger angeschaltet wird.

Bei einer Ausführungsform ist vorgesehen, dass bei Berührung oder geringem seitlichen Druck gegen das Teil 32 durch das Transportwerkzeug 24 der Sensor 46 diese Berührung oder Auslenkung erfasst und über die Schaltung der Schwingungserzeuger 44 angeschaltet wird.

Der Schwingungserzeuger 44 kann so lange laufen, solange eine Berührung des Transportwerkzeugs 24 erfolgt oder für eine festgelegte Zeitdauer (Zeitschaltung). Danach wird der Schwingungserzeuger 44 wieder abgeschaltet.

Es ist jedoch auch möglich, die Vorrichtung mit der Waage 10 steuerungsmäßig zu koppeln, was über Funk oder über Kabel erfolgen kann. Der Schwingungserzeuger 44 würde dann so lange laufen, bis eine vorbestimmte Masse der zu dosierenden Substanz erreicht ist. Dies vereinfacht die Dosierung enorm und beschleunigt sie auch.

Eine vereinfachte Ausführungsform der Erfindung sieht vor, durch einen äußeren Schalter die Vorrichtung zu betätigen oder in den Standby-Modus zu schalten, wobei der Schalter an der Vorrichtung selbst oder an der Waage angebracht sein könnte.

Die Frequenz und/oder die Amplitude der Vibrationen sind einstellbar, durch beispielsweise am Gehäuse 30 angebrachte Einstellelemente 50.

Da bei der Dosierung Partikel am Teil 32 haften bleiben können und dieses die nächste Probe kontaminieren würde, ist das untere Teil 54 des Teiles 32 auswechselbar in der Koppelstelle 48 gelagert. Ohne dass ein Werkzeug verwendet werden muss, wird das untere Teil 54 einfach von der Koppelstelle 48 abgezogen, und ein anderes, gereinigtes Teil 54 wird wieder eingeschoben.

### Bezugszeichenliste

- 10: Waage
- 12: Wägesystem
- 14: Gehäuse
- 16: Lastkragarm
- 18: Wägeraum
- 20: Windschutz
- 22: Wägeschale
- 24: Transportwerkzeug
- 26: Wand
- 28: Öffnung
- 30: Gehäuse
- 32: Teil
- 34: Lager
- 36: Träger
- 38: Öffnung
- 40: Schwingungsisolierung
- 42: Batterie
- 44: Schwingungserzeuger
- 46: Sensor
- 48: Koppelstelle
- 50: Einstellelemente
- 52: oberes Teil
- 54: unteres Teil

## Patentansprüche

1. Vorrichtung zum manuellen Feindosieren einer insbesondere pulverförmigen Substanz aus einem manuellen Transportwerkzeug (24), mit einem mit einem Schwingungserzeuger (44) gekoppelten, durch den Schwingungserzeuger (44) in Vibrationen versetzbaren beweglichen Teil (32), **dadurch gekennzeichnet, dass** das Teil (32) in dem vom Transportwerkzeug kontaktierbaren Abschnitt der Vorrichtung ein nach außen hin geschlossener Körper ist, das Transportwerkzeug (24) bei Kontakt mit dem Schwingungserzeuger (44) vibriert, und dass ein Sensor (46) vorgesehen ist, der die Anwesenheit des Transportwerkzeugs (24) in der Nähe des beweglichen Teils (32) oder ein Berühren oder Auslenken des beweglichen Teils (32) durch das Transportwerkzeug (24) detektiert, um ein Einschalten des Schwingungserzeugers (44) zu initiieren.

2. Vorrichtung nach Anspruch 1, **dadurch gekennzeichnet, dass** ein Schalter zum Ein- und Ausschalten des Schwingungserzeugers (44) vorgesehen ist.

3. Vorrichtung nach Anspruch 1 oder 2, **dadurch gekennzeichnet, dass** der Sensor (46) Teil einer Schaltung ist, die so ausgebildet ist, dass der Schwingungserzeuger (44) so lange bewegt wird, solange sich das Transportwerkzeug (24) in der Nähe des beweglichen Teils (32) befindet oder es berührt oder auslenkt.

4. Vorrichtung nach einem der vorhergehenden Ansprüche, **dadurch gekennzeichnet, dass** eine Zeitschaltung vorgesehen ist, die den Schwingungserzeuger (44) nach Anlaufen für eine feste Zeitdauer mit Strom versorgt.

5. Vorrichtung nach einem der vorhergehenden Ansprüche, **dadurch gekennzeichnet, dass** das bewegliche Teil (32) stabförmig ist und/oder am Rest der Vorrichtung auswechselbar angebracht ist.

6. Vorrichtung nach einem der vorhergehenden Ansprüche, **dadurch gekennzeichnet, dass** die Frequenz und/oder Amplitude der Vibrationen des beweglichen Teils (32) verstellbar sind.

7. Vorrichtung nach einem der vorhergehenden Ansprüche, **dadurch gekennzeichnet, dass** die Vorrichtung ein Gehäuse (30) aufweist, aus dem das bewegliche Teil (32) herausragt.

8. Vorrichtung nach einem der vorhergehenden Ansprüche, **dadurch gekennzeichnet, dass** das bewegliche Teil (32) elastisch gelagert ist.

9. Vorrichtung nach Anspruch 8, **dadurch gekennzeichnet, dass** die elastische Lagerung (34) zudem eine Dichtung des Gehäuses (30) um das bewegliche Teil (32) herum bildet.

10. Vorrichtung nach einem der vorhergehenden Ansprüche, **dadurch gekennzeichnet, dass** sie batteriebetrieben ist und/oder einen Boden hat, mit dem sie auf eine Öffnung (28) eines Raumes aufsetzbar ist, in den das bewegliche Teil (32) ragt.

11. Vorrichtung nach Anspruch 10, **dadurch gekennzeichnet, dass** am Boden der Vorrichtung eine Schwingungsisolierung (40) vorgesehen ist.

12. Elektronische Waage mit einer Vorrichtung nach einem der vorhergehenden Ansprüche, die oberhalb einer Wägeschale (22) positioniert ist.

13. Waage nach Anspruch 12, **dadurch gekennzeichnet, dass** die Vorrichtung mit der Waage so gekoppelt ist, dass bei Erreichen einer vorbestimmten, zu dosierenden Masse der Substanz der Schwingungserzeuger (44) ausgeschaltet wird.

## Claims

1. Device for manual fine metering of, in particular, a pulverulent substance from a manual transport tool (24), with a movable part (32) which is coupled with a vibrator (14) and which can be set into vibration by the vibrator (44), **characterised in that** the part (32) in the section of the device contactable by the transport tool is a body which is closed towards the outside and which vibrates the transport tool (24) on contact with the vibrator (44) and that a sensor (46) is provided, which detects the presence of the transport tool (24) in the proximity of the movable part (32) or contact of the movable part (32) with or deflection of the movable part (32) by the transport tool (24) so as to initiate switching-on of the vibrator (44).

2. Device according to claim 1, **characterised in that** a switch for switching on and switching off the vibrator (44) is provided.

3. Device according to claim 1 or 2, **characterised in that** the sensor (46) is part of a circuit which is so constructed that the vibrator (44) is moved until the transport tool (24) is disposed in the vicinity of the movable part (32) or contacts or deflects it.

4. Device according to any one of the preceding claims, **characterised in that** a time circuit supplying the vibrator (44) with current for a fixed period of time after starting is provided.

5. Device according to any one of the preceding claims, **characterised in that** the movable part (32) is rod-shaped and/or is exchangeably mounted on the rest of the device.

6. Device according to any one of the preceding claims, **characterised in that** the frequency and/or amplitude of the vibrations of the movable part (32) is or are adjustable.

7. Device according to any one of the preceding claims, **characterised in that** the device comprises a housing (30) from which the movable part (32) projects.

8. Device according to any one of the preceding claims, characterised is that the movable part (32) is resiliently mounted.

9. Device according to claim 8, **characterised in that** the resilient mounting (34) additionally forms a seal of the housing (30) around the movable part (32).

10. Device according to any one of the preceding claims, **characterised in that** it is battery-operated and/or has a base by which it is placeable on an opening (28) of a space into which the movable part (32) projects.

11. Device according to claim 10, **characterised in that** a vibration insulation (40) is provided at the base of the device.

12. Electronic weighing machine with a device according to any one of the preceding claims, the device being positioned above a weighing pan (22).

13. Weighing machine according to claim 12, **characterised in that** the device is so coupled with the weighing machine that on reaching a predetermined mass, which is to be metered, of the substance the vibrator (44) is switched off.

## Revendications

1. Dispositif de dosage manuel de précision d'une substance en particulier pulvérulente depuis un outil de transport manuel (24), comprenant une pièce mobile (32) couplée à un générateur de vibrations (44) et pouvant être amenée à vibrer par le générateur de vibrations (44), **caractérisé en ce que** la pièce (32), dans la section du dispositif pouvant être amenée en contact avec l'outil de transport, est un corps fermé vis-à-vis de l'extérieur, l'outil de transport (24) vibre au contact du générateur de vibrations (44), et **en ce qu'**un capteur (46) est prévu, qui détecte la présence de l'outil de transport (24) à proximité de la pièce mobile (32) ou un contact ou une déviation de la pièce mobile (32) effectué(e) par l'outil de transport (24), afin d'initier une mise en service du générateur de vibrations (44).

2. Dispositif selon la revendication 1, **caractérisé en ce qu'**un commutateur est prévu pour la mise en service et hors service du générateur de vibrations (44).

3. Dispositif selon la revendication 1 ou 2, **caractérisé en ce que** le capteur (46) fait partie d'un circuit qui est conçu de telle sorte que le générateur de vibrations (44) est déplacé aussi longtemps que l'outil de transport (24) se situe à proximité de la pièce mobile (32) ou le touche ou le dévie.

4. Dispositif selon l'une quelconque des revendications précédentes, **caractérisé en ce qu'**un circuit de temporisation est prévu, qui alimente le générateur de vibrations (44) en courant pendant une période fixe après le démarrage.

5. Dispositif selon l'une quelconque des revendications précédentes, **caractérisé en ce que** la pièce mobile (32) est en forme de barre et/ou est montée de manière interchangeable sur le reste du dispositif.

6. Dispositif selon l'une quelconque des revendications précédentes, **caractérisé en ce que** la fréquence et/ou l'amplitude des vibrations de la pièce mobile (32) sont réglables.

7. Dispositif selon l'une quelconque des revendications précédentes, **caractérisé en ce que** le dispositif comprend un boîtier (30) dont la pièce mobile (32) fait saillie.

8. Dispositif selon l'une quelconque des revendications précédentes, **caractérisé en ce que** la pièce mobile (32) est montée de manière élastique.

9. Dispositif selon la revendication 8, **caractérisé en ce que** le montage élastique (34) forme en outre un joint du boîtier (30) autour de la pièce mobile (32).

10. Dispositif selon l'une quelconque des revendications précédentes, **caractérisé en ce qu'**il est alimenté par une batterie et/ou présente un fond au moyen duquel il peut être posé sur une ouverture (28) d'une chambre dans laquelle la pièce mobile (32) fait saillie.

11. Dispositif selon la revendication 10, **caractérisé en ce qu'**une isolation des vibrations (40) est prévue sur le fond du dispositif.

12. Balance électronique comprenant un dispositif selon l'une quelconque des revendications précédentes, qui est positionné au-dessus d'un plateau de pesée (22).

13. Balance selon la revendication 12, **caractérisée en ce que** le dispositif est couplé à la balance, de sorte que lorsqu'une masse prédéfinie à doser de la substance est atteinte, le générateur de vibrations (44) est mis hors service.
